# EUROPÄISCHE PATENTANMELDUNG

(11) **EP 2 764 905 A1**
(43) Veröffentlichungstag der Anmeldung: **13.08.2014**
(21) Anmeldenummer: 14151522.1
(22) Anmeldetag: 17.01.2014
(51) Int. Cl.: B01D 46/24, B01D 46/52

(54) **Filterkörper**

(30) Priorität: 12.02.2013 DE 102013002277
(71) Anmelder: MANN + HUMMEL GMBH, 71638 Ludwigsburg (DE)
(72) Erfinder: Ruhland, Klaus-Dieter, 67149 Meckenheim (DE); Kaufmann, Michael, 67149 Meckenheim (DE); Kupfer, Friedrich, 84163 Poxau (DE); Vilsmaier, Thomas, 84163 Marklkofen (DE); Krieger, Joachim-Paul, 94419 Reisbach (DE)

(57) **Zusammenfassung**

Die Erfindung betrifft einen Filterkörper (12) mit einer Längsachse (L) und zwei Stirnseiten (52, 54), umfassend ein um die Längsachse (L) angeordnetes, zickzackförmig gefaltetes Filtermedium (56), welches einen Innenumfang und einen Außenumfang (58, 60) aufweist, wobei Faltenkanten (62) auf dem Innen- und/oder Außenumfang (58, 60) des Filterkörpers (12) liegen und die Faltenkanten (62) mindestens bereichsweise eine Folge von Prägestellen (64) aufweisen, welche benachbarte Faltenkanten (62) gegeneinander fixieren, und ein Fadenwickel (66) aus mindestens einem umlaufenden Faden (68) am Außenumfang (60) des Filterkörpers (12) angebracht ist.

Die Erfindung betrifft ferner ein Filterelement (10) mit einem Filterkörper (12), sowie ein Filtersystem (100) zum auswechselbaren Einbau eines solchen Filterelements (10).

## Beschreibung

### Technisches Gebiet

Die Erfindung betrifft einen Filterkörper, insbesondere zur Verwendung als Luftfilter einer Brennkraftmaschine, sowie ein Filterelement mit einem Filterkörper und ein Filtersystem zum Einbau eines solchen Filterelements.

### Stand der Technik

Aus der WO 2009/047196 A1 ist ein Filterelement für Brennkraftmaschinen bekannt, das aus einem zickzackförmig gefalteten Filtermedium in konzentrischer Form, einer ersten an einer Stirnseite angeordneten offenen oder geschlossenen Endscheibe und einer zweiten an der gegenüberliegenden Stirnseite angeordneten Endscheibe besteht, wobei die Endscheibe eine konzentrische Öffnung aufweist und sich im Wesentlichen kreisringförmig über die Falten des Filtermediums erstreckt. Das Filterelement weist Ringwülste und Dichtungsnuten zur Abdichtung in einem Gehäuse auf.

Weiter beschreibt die WO 2009/047196 A1 ein Filtersystem mit einem Filterelement. Dieses Filtersystem dient insbesondere der Filtrierung der Ansaugluft einer Brennkraftmaschine und besteht aus einem Gehäuse und einem abnehmbaren Deckel zur Aufnahme des Filterelements. Das Filtersystem ist mit zwei Ringnuten ausgestattet, die im Bereich der Abdichtung mit den Dichtkonturen des Filterelements kommunizieren.

Grundsätzlich ist die zuverlässige und prozesssichere Abdichtung eines Filterelements in einem Gehäuse wichtig. Die Abdichtung soll temperaturbeständig und rütteltest ausgeführt sein. Auch an Anlagen oder Einrichtungen, die starken Schwingungen oder Erschütterungen ausgesetzt sind, muss die Abdichtung des Filterelements gewährleistet sein. Gleichzeitig soll aber das Filterelement selbst möglichst keine metallischen Elemente aufweisen, damit es problemlos thermisch entsorgt werden kann. Um diese Eigenschaft zu gewährleisten, ist eine hohe mechanische Stabilität des Filterelements, dessen Filtermedium üblicherweise aus Papier oder Vlies besteht, über die Lebensdauer erforderlich.

Eine Aufgabe der Erfindung ist es daher, einen Filterkörper für ein Filterelement so zu gestalten, dass eine hohe mechanische Stabilität des Filterelements über die Lebensdauer auch bei ungünstigen Umgebungsbedingungen wie Feuchtigkeit und/oder große Temperaturschwankungen gewährleistet ist.

Eine weitere Aufgabe der Erfindung ist es, ein Filtersystem mit einem solchen austauschbaren Filterelement zu schaffen, das einer hohe mechanische Stabilität über die Lebensdauer auch bei ungünstigen Umgebungsbedingungen wie Feuchtigkeit und/oder große Temperaturschwankungen aufweist.

Die vorgenannten Aufgaben werden nach einem Aspekt der Erfindung gelöst mit einem Filterkörper, bei dem Faltenkanten auf dem Innen- und/oder Außenumfang des Filterkörpers liegen und die Faltenkanten mindestens bereichsweise eine Folge von Prägestellen aufweisen, welche benachbarte Faltenkanten gegeneinander fixieren, und wobei ein Fadenwickel aus mindestens einem umlaufenden Faden am Außenumfang des Filterkörpers angebracht ist, und nach einem weiteren Aspekt der Erfindung mit einem Filtersystem mit einem derartigen Filterkörper.

Günstige Ausgestaltungen und Vorteile der Erfindung ergeben sich aus den weiteren Ansprüchen, der Beschreibung und der Zeichnung.

### Offenbarung der Erfindung

Es wird ein Filterkörper mit einer Längsachse und zwei Stirnseiten vorgeschlagen, der ein um die Längsachse angeordnetes, zickzackförmig gefaltetes Filtermedium umfasst, welches einen Innenumfang und einen Außenumfang aufweist. Dabei sind Faltenkanten auf dem Innen- und/oder Außenumfang des Filterkörpers angeordnet, wobei die Faltenkanten mindestens bereichsweise eine Folge von Prägestellen aufweisen, welche benachbarte Faltenkanten gegeneinander fixieren, und wobei ein Fadenwickel aus mindestens einem umlaufenden Faden am Außenumfang des Filterkörpers angebracht ist.

Die Prägestellen können beispielsweise durch Walzen des gefalteten Filtermediums aufgebracht werden, wobei die Faltenkanten des gefalteten Filtermediums an aufeinander folgenden Faltenkanten definiert eingedrückt werden. Die Faltenkante verbreitet sich an der gewalzten Stelle und kann sich so an der Prägestelle einer benachbarten Faltenkante abstützen. Dadurch kann der Filterkörper voreilhaft gegen Verformung stabilisiert werden. Die Prägestellen können als umlaufende Struktur an der Mantelfläche des Filtermediums auf jeweils gleicher axialer Höhe angeordnet sein. Denkbar ist auch, Prägestellen nicht umlaufend auszuführen, sondern alternierend mit ungeprägten Bereichen an der Mantelfläche auszuführen. In diesem Fall ist es vorteilhaft, wenn bei axial benachbarten Prägestellen geprägte und ungeprägte Bereiche am Umfang dazu jeweils versetzt angeordnet sind.

Durch die Abstützung der Faltenkanten mit einer Kombination aus Prägestellen auf dem Außenumfang und/oder dem Innenumfang des Filterkörpers, also anströmseitig und/oder abströmseitig des Filterkörpers, und Fadenwickel sind die Falten gleichmäßig umlaufend verteilt. Durch die Kombination der Prägestellen im An- und/oder Abströmbereich des Filterkörpers und der Fixierung durch den Fadenwickel ergibt sich so eine vorteilhaft angeordnete Faltenstellung und -verteilung. Auch die Geradheit der Falten in ihrer längenmäßigen Erstreckung in Richtung der Längsachse des Filterkörpers ist bei der Kombination als sehr günstig gegenüber Varianten mit Abstützung durch Prägestellen oder Fadenwickel allein anzusehen. Eine Paketierung, Schiefstellung oder Wellenbildung der Falten des Filtermediums durch Umwelteinflüsse, wie Wasser, Luftfeuchte, Temperatur und dergleichen wird bei dieser Anordnung deutlich verringert. Die Prägestellen sorgen für einen gleichmäßigen Abstand der Falten und somit für einen optimalen Kanal für das anströmende Medium, Weiterhin bleibt eine definierte Staubtasche, die einer Paketierung der Falten entgegenwirkt. Der Fadenwickel fixiert den durch die Prägestellen eingestellten Faltenabstand und schnürt das Filtermedium zu einem kompakten Filterkörper. Die Steifigkeit des Filterkörpers bleibt so erhalten. Zusätzlich nimmt der Filterkörper die axialen Verspannkräfte beim Einbau eines daraus gebildeten Filterelements in ein Gehäuse ohne Faltenverformungen auf.

In einer günstigen Ausführungsform kann das Filtermedium aus Papier, aus Papier mit Kunststofffasern verstärkt und/oder aus kunststoffbeschichtetem Papier gebildet sein. Der Einsatz dieser Werkstoffe als Filtermedium stellt eine sehr wirtschaftliche Möglichkeit dar, ein solches Filterelement zu realisieren. Gleichzeitig bietet die beschriebene Formgestaltung eine stabile Anordnung, sodass eine selbsttragende Bauweise des Filterkörpers und damit eine günstige Montageeigenschaft gegeben ist.

Vorteilhafterweise kann der Fadenwickel mindestens einen Faden in Richtung der Längsachse am Außenumfang des Filterkörpers umfassen. Durch zusätzliche Fäden senkrecht zu den rund umlaufenden Fäden auf dem Außenumfang des Filterkörpers kann der Fadenwickel zusätzlich versteift werden und ist so für sehr raue Umgebungsbedingungen geeignet. Außerdem können so auch sehr große und schwere Filterkörper beispielsweise für Bau- und Landmaschinenanwendungen zusätzlich stabilisiert werden.

In einer Ausführungsform werden ein oder mehrere Fäden schraubenförmig um den Außenumfang gewickelt. Dabei kann es vorteilhaft sein, Bereiche mit verschiedenen Steigungen vorzusehen. Beispielsweise kann ein in der Nähe der geschlossenen Endscheibe angeordneter Bereich mit einer geringeren Steigung umwickelt werden, so dass die Fäden näher aneinander angeordnet sind, beispielsweise in einem Abstand von weniger als 2 cm (0,8 inches), bevorzugt etwa 1 cm (0,4 inches). Auf diese Weise kann in diesem Bereich eine griffstabile Zone geschaffen werden, in welcher das Filtermedium für die Aufnahme der von Hand aufgebrachten Bedienkräfte beim Wechsel der Filterelemente verstärkt werden kann.

Zweckmäßigerweise kann der Fadenwickel aus einem kunststoffgetränkten Faden bestehen. Solche Fäden haben den Vorteil, dass sie wenig feuchtigkeitsanfällig sind, gutes Langzeitverhalten zeigen und außerdem zusätzliche Festigkeit aufweisen, so dass der Filterkörper insgesamt stabiler wird.

In einer vorteilhaften Ausgestaltung kann der Fadenwickel mit dem Filtermedium verklebt sein. Der Faden des Fadenwickels kann aus einem Bad aus Schmelzkleber auf den Filterkörper gewickelt werden. Wenn der gewickelte Filterkörper anschließend einer Wärmebehandlung unterzogen wird, kann der Schmelzkleber sich mit dem Filtermedium verbinden und aushärten und verschafft so dem Fadenwickel und damit dem Filterkörper eine erhebliche Steifigkeit. Alternativ sind jedoch auch andere Aushärteverfahren je nach eingesetztem Kleber denkbar. So können beispielsweise auch Aushärteverfahren mit UV-Licht eingesetzt werden.

Vorteilhafterweise kann der Filterkörper an mindestens einer Stirnseite einen Versteifungsring aufweisen. Dadurch erhält der Filterkörper ein weiteres stabilisierendes Element, das zusammen mit der Kombination aus Prägestellen und Fadenwickel zur verbesserten Aufnahme der axialen Verspannkräfte beim Einbau eines daraus gebildeten Filterelements in ein Gehäuse dienen kann.

Die Erfindung betrifft nach einem weiteren Aspekt ein Filterelement, das einen Filterkörper, eine erste an einer Stirnseite angeordnete offene oder geschlossene Endscheibe und eine zweite an der gegenüberliegenden Stirnseite angeordnete Endscheibe sowie ein um die Längsachse konzentrisch zwischen der ersten und der zweiten Endscheibe angeordnetes Stützrohr umfasst. Ein solches Filterelement ist einbaufertig zur Verwendung in einem Filtersystem beispielsweise für eine Brennkraftmaschine geeignet. Die beiden Endscheiben und das Stützrohr dienen dabei zur Montage und Abdichtung in dem Gehäuse des Filtersystems.

Vorteilhafterweise kann die zweite Endscheibe, ebenso wie die erste Endscheibe, aus einem Polyurethanschaum oder einem Elastomer bestehen. Selbstverständlich besteht auch die Möglichkeit, die Endscheibe aus mehreren Kunststoffkomponenten herzustellen, um so eine optimale Verformbarkeit über einen großen Temperaturbereich, wie er beim Einsatz in der Praxis auftreten kann, zu gewährleisten. So sind auch thermoplastische Kunststoffe nicht ausgeschlossen. Beide Endscheiben können mit dem Filterkörper verschweißt oder verklebt ausgeführt sein, um eine stabile Verbindung zu bewirken.

Zweckmäßigerweise kann die erste Endscheibe eine radiale Dichtung gegenüber dem Gehäuse aufweisen. Dies hat den Vorteil, dass neben einer guten Abdichtung und damit einer sicheren Filterwirkung, durch die radiale Dichtung eine radiale Führung des Filterelements im Gehäuse bewirkt werden kann und damit eine sehr stabile Halterung des Filterelements im Gehäuse entsteht.

Zweckmäßigerweise kann das Filterelement als Luftfilter, insbesondere als Luftfilter einer Brennkraftmaschine verwendet werden. Der sichere Betrieb von Brennkraftmaschinen beruht auch auf einer sicheren und günstigen Filterung der Ansaugluft für den Verbrennungsbetrieb. Das beschriebene Filterelement stellt dafür eine wirtschaftliche Möglichkeit dar.

Vorteilhaft ist ebenso die Verwendung des Filterelements als Partikelfilter, insbesondere als Dieselpartikelfilter einer Brennkraftmaschine. Auch hier sind die sichere Montage und wirtschaftliche Austauschbarkeit des beschriebenen Filterelements von entscheidender Bedeutung.

Die Erfindung betrifft nach einem weiteren Aspekt ein Filtersystem mit einem Filterelement, umfassend ein Gehäuse, welches im Wesentlichen konzentrisch um eine Längsachse aufgebaut ist, einen das Gehäuse verschließenden Deckel, der ebenfalls konzentrisch um die Längsachse aufgebaut ist, einen am Gehäuse und/oder Deckel angeordneten Einlass zum Zuführen des zu filternden Mediums, insbesondere Luft, wobei am Gehäuse konzentrisch zur Längsachse ein Auslass zur Ableitung des gefiltertem Mediums vorgesehen ist, wobei am Gehäuse im Bereich des Auslasses eine Dichtungskontur vorgesehen ist, die mit der radialen Dichtung der ersten Endscheibe des Filterelements korrespondiert, wobei das Filterelement auswechselbar in dem Gehäuse des Filtersystems angeordnet ist. Der wesentliche Vorteil eines solchen Filtersystems liegt dabei in der sicheren und stabilen Montage des Filterelements sowie einer sehr wirtschaftlichen Austauschbarkeit des Filterelements im Servicefall. Gerade bei niedrigen Standzeiten, wie sie im Land- und Baumaschineneinsatz auftreten können, ist die schnelle Austauschbarkeit von großer Bedeutung.

Vorteilhafterweise kann im Bereich des Einlasses des Filtersystems ein Zyklonabscheider vorgesehen sein und am Gehäuse oder am Deckel ein Schmutzauslass vorgesehen sein. Dieser Zyklonabscheider besteht aus einer Leitgeometrie, die das zu filternde Medium in eine Rotation versetzt. Durch diese Rotation wird der Schmutz im Bereich der Gehäusewand aufkonzentriert und an einer geeigneten Stelle über einen Schmutzauslass ausgetragen. Durch die Vorabscheidung des größten Teils an Schmutz aus der zu filternden Luft kann die Standzeit des eigentlichen Filterelements entscheidend verlängert werden.

Gemäß einer weiteren Ausgestaltung der Erfindung kann ein Sekundärelement im Inneren des Filterelements angeordnet sein. Das Sekundärelement, das aus einer tragenden Struktur bestehen kann, die mit einem durchlässigen Filtermedium, beispielsweise einem Vlies, verkleidet ist, hat die Aufgabe, bei einem Austausch des Filterelements den Auslass des Filtersystems weiterhin verschlossen zu halten, so dass kein Schmutz in diesen Bereich eindringen kann, während das Filterelement gereinigt oder erneuert wird. Das Sekundärelement ist in bevorzugter Ausgestaltung über eine Schraubverbindung mit dem Gehäuse verbunden und zum Gehäuse mit einer Dichtung versehen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine perspektivische Ansicht eines Filtersystems nach einem Ausführungsbeispiel der Erfindung mit tangentialem Einlass, zentrischem Auslass und bodenseitigem Schmutzauslass;
- Fig. 2: eine perspektivische Ansicht eines Filtersystems nach einem Ausführungsbeispiel der Erfindung mit radialem Einlass und zentrischem Auslass;
- Fig. 3: einen Längsschnitt durch ein Filtersystem nach einem Ausführungsbeispiel der Erfindung mit tangentialem Einlass, zentrischem Auslass und bodenseitigem Schmutzauslass;
- Fig. 4: eine schematische Darstellung eines Filterkörpers nach dem Stand der Technik mit Prägestellen auf dem Innen- und Außenumfang des Filterkörpers;
- Fig. 5: eine schematische Darstellung eines Filterkörpers nach einem Ausführungsbeispiel der Erfindung mit Prägestellen auf dem Innen- und Außenumfang des Filterkörpers sowie einem Fadenwickel auf dem Außenumfang;
- Fig. 6: eine schematische Darstellung eines Filterkörpers nach einem weiteren Ausführungsbeispiel der Erfindung mit Prägestellen auf dem Innen- und Außenumfang des Filterkörpers, einem Fadenwickel auf dem Außenumfang sowie einem Versteifungsring auf einer Stirnseite;
- Fig. 7: ein Filterelement aus einem Filterkörper nach Fig. 5;
- Fig. 8: einen Längsschnitt durch ein Filterelement nach Fig. 7;
- Fig. 9: eine vergrößerte Ansicht eines Teils des Längsschnitts durch ein Filterelement nach Fig. 7.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

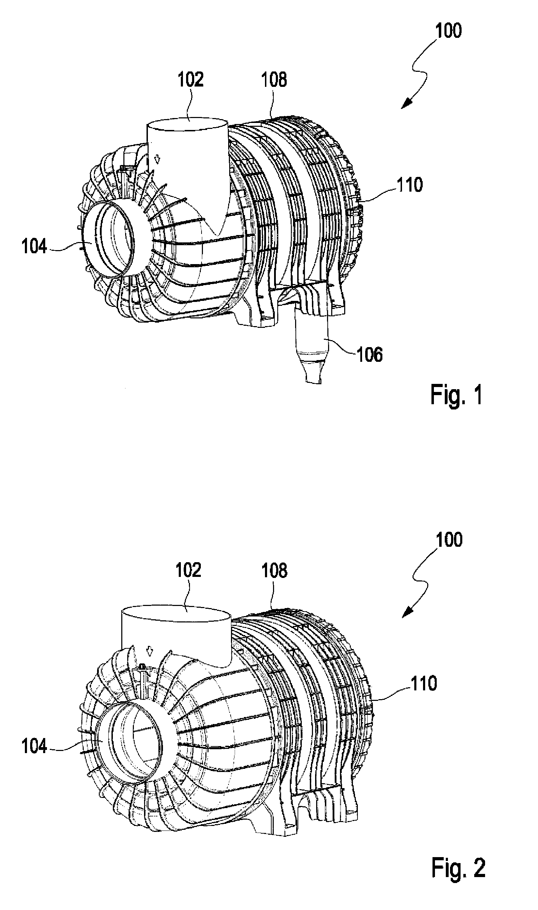

Figur 1 zeigt eine perspektivische Ansicht eines Filtersystems 100 nach einem Ausführungsbeispiel der Erfindung mit tangentialem Einlass 102, zentrischem Auslass 104 an einer Gehäusestirnseite und bodenseitigem Schmutzauslass 106. Dargestellt ist eine Rundfilterbauform, die aus einem Gehäuse 108 besteht, das mit einem Deckel 110, beispielsweise mit Schraub- oder Bajonettverschluss, verschlossen wird. Bei einer Verwendung als Luftfiltersystem strömt staubbeladene Luft in den Einlass 102, der tangential zum innen eingebauten Luftfilterelement angeordnet ist, sodass die Luft im Innern des Gehäuses 108 durch einen Anströmschutz am Filterelement in eine Rotationsbewegung versetzt wird. Filterelement und Anströmschutz sind in der Zeichnung nicht dargestellt. Durch den über die Rotationsbewegung der Luft bewirkten Zykloneffekt wirken Fliehkräfte auf die Staubpartikel der strömenden Luft, sodass diese sich teilweise an der Gehäusewand abscheiden und über den Schmutzauslass 106 aus dem Filtersystem 100 abströmen können. Dadurch wird das Filterelement weniger belastet, die Standzeit des Filterelements wird erhöht. Die gereinigte Luft kann über den zentrischen Auslass 104 aus dem Gehäuse 108 abgeführt werden.

Figur 2 zeigt eine perspektivische Ansicht eines Filtersystems 100 nach einem Ausführungsbeispiel mit deckelseitigem Einlass 102 und zentrischem Auslass 104. Dargestellt ist ebenfalls eine Rundfilterbauform, die aus einem Gehäuse 108 besteht, das mit einem Deckel 110 verschlossen ist. Der Einlass, über den staubbeladene Luft in das Gehäuse gelangen kann, ist in dem Fall zentral über dem innen angebrachten Filterelement angeordnet. Der Auslass 104, über den die gereinigte Luft abströmen kann, ist ebenfalls wie in Figur 1 zentrisch angeordnet.

Derartige Filtersysteme wie in Figur 1 und 2 dargestellt werden üblicherweise in Baumaschinen und Landmaschinenbereich eingesetzt. Sie zeichnen sich durch große Robustheit aus und weisen wegen der hohen Filterlast kurze Standzeiten auf. Ein Filtersystem 100 mit beladenem Filterelement muss dabei einen Gewichtszuwachs von 10 kg oder mehr tolerieren.

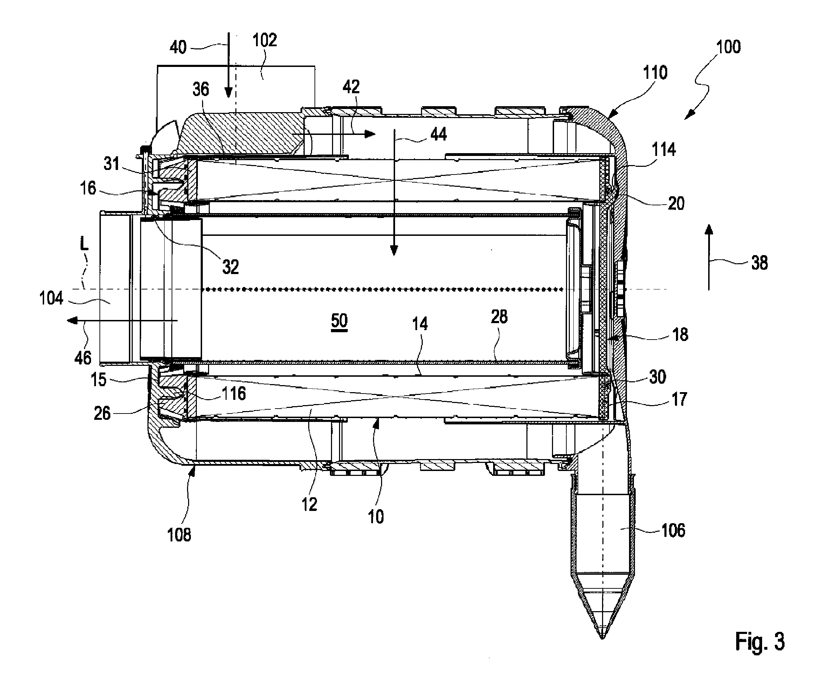

In Figur 3 ist ein Längsschnitt durch ein Filtersystem 100 nach einem Ausführungsbeispiel mit tangentialem Einlass 102, zentrischem Auslass 104 und bodenseitigem Schmutzauslass 106 dargestellt. Das Gehäuse 108 des Filtersystems 100 ist mit einem Deckel 110 verschlossen. Ein Filterelement 10, das aus konzentrisch zu einer Längsachse L angeordnetem Stützrohr 14 und Filterkörper 12 besteht, ist an zwei gegenüberliegenden Stirnseiten 15, 17 mit einer ersten und einer zweiten Endscheibe 16, 18, die beispielsweise aus gießbarem Polyurethan, insbesondere Polyurethanschaum oder einem Elastomer ausgeführt sein können, abgeschlossen. Zweite Endscheibe 18 und Stützrohr 14 des Filterelements 10 können auch einstückig ausgeführt sein. Der Filterkörper 12 kann beispielsweise zickzackförmig gefaltet, ringförmig geschlossen ausgeführt sein und beispielsweise aus Papier, aus Papier mit Kunststofffasern verstärkt und/oder aus kunststoffbeschichtetem Papier bestehen.

Die zweite Endscheibe 18, deren Stabilität durch eine Verstärkungsplatte 30 erhöht wird, weist Abstütznoppen 20 auf, welche bei einem Einbau in das aufnehmende Gehäuse 108 an einer inneren Deckelkontur 114 des Deckels 110 anliegend sich an dem Gehäuse 108 sowohl axial als auch radial abstützen. An der gegenüberliegenden Stirnseite 15 des Filterelements 10 ist an der ersten Endscheibe 16, deren Stabilität durch einen Verstärkungsring 31 erhöht wird, eine Radialdichtung 26 angebracht, mit deren Hilfe das Filterelement 10 sich über die Dichtungskontur 116 an dem Gehäuse 108 radial abstützt und den ungefilterten gegen den gefilterten Luftraum abdichtet. Das Filterelement 10 ist damit sowohl axial als auch doppelt radial gegen das Gehäuse 108 verspannt.

Staubbeladene Luft kann durch den Einlass 102 in Pfeilrichtung 40 einströmen, der in diesem Fall als tangentialer Einlass dargestellt ist und durch die mit Hilfe eines Zyklonabscheiders 36 bewirkte Rotationsbewegung der Luft einen Zyklonbetrieb ermöglicht. Staubpartikel können durch die Rotationsbewegung teilweise vorabgeschieden sich an der inneren Gehäusewand ablagern und durch den Schmutzauslass 106 bei Einbau des Filtergehäuses 108 in waagrechter Lage nach unten durch die Schwerkraft aus dem Filtersystem 100 entleert werden. Die Luft strömt beim Betrieb nach Teilabscheidung der Staubpartikel durch den Filterkörper 12 in Pfeilrichtung 42, 44 ins Innere 50 des Filterelements. Staubpartikel bleiben dabei je nach Filtermedium ab einer bestimmten Größe im Filtermedium hängen. Je nach Staubeintrag muss deshalb das Filterelement 10 nach einer gewissen Standzeit ausgetauscht werden.

Über den Auslass 104 strömt die gefilterte Luft in Pfeilrichtung 46 ab. Im Inneren 50 des Filterelements 10, also im Reinluftbereich, ist ein Sekundärelement 28 angebracht, das im Wesentlichen aus einer tragenden Struktur mit einem relativ durchlässigen Filtermedium, beispielsweise einem Vlies, besteht und beim Austausch des Filterelements 10 im Gehäuse 108 zum Schutz der weiteren Luftführung, beispielsweise einer Brennkraftmaschine, gegen eindringende Staubpartikel und andere Gegenstände verbleibt. Das Sekundärelement 28 ist mit einem Schraubteil 32 fest am auslassseitigen Teil des Gehäuses 108 eingeschraubt und mit einer Radialdichtung gedichtet.

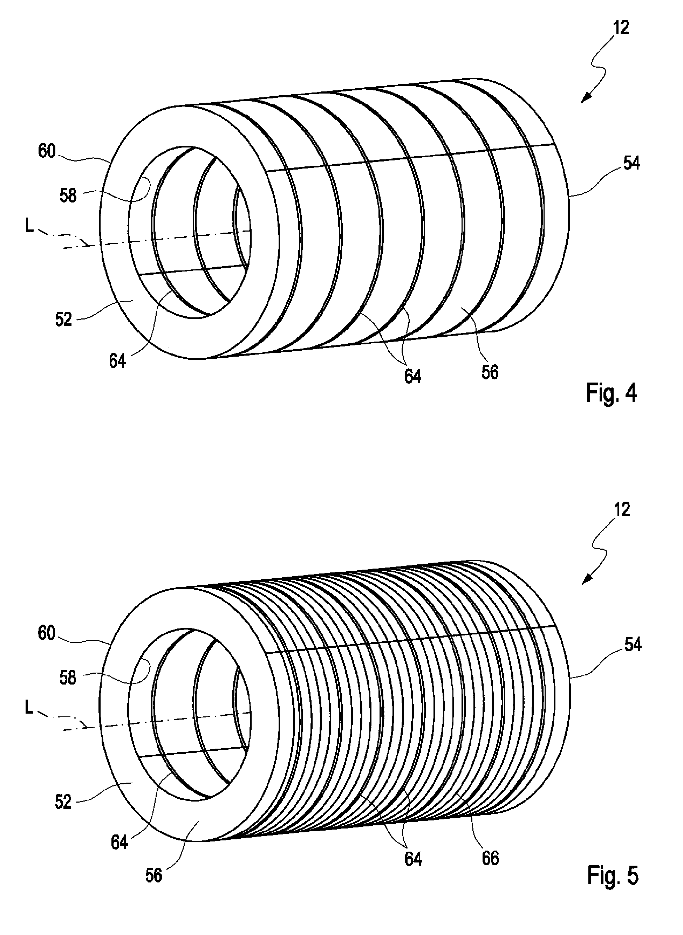

Figur 4 zeigt eine rein schematische Darstellung eines Filterkörpers 12 mit den Stirnseiten 52, 54 nach dem Stand der Technik mit Prägestellen 64 auf dem Innen- und Außenumfang 58, 60 des Filterkörpers 12. Der Filterkörper 12, bei dem rein schematisch die Form eines Hohlzylinders und nicht die Details eines zickzackförmig gefalteten Filtermediums 56 dargestellt sind, weist Prägestellen 64 auf, welche ringförmig auf dem Innen- als auch dem Außenumfang 58, 60 des Filterkörpers 12 angeordnet sind. Prinzipiell können diese Prägestellen 64 im Filtermedium 56 vor der Herstellung des Filterkörpers 12 im Halbzeug, also beispielsweise dem gefalteten Papier, erfolgen; denkbar ist jedoch auch eine Verprägung nach Herstellung des Filterkörpers 12 in seiner endgültigen Form mit geeigneten Prägestempeln.

In einer realen Ausführungsform umfasst der Filterkörper 12 mit einer Längsachse L und zwei Stirnseiten 52, 54 ein um die Längsachse L angeordnetes, zickzackförmig gefaltetes Filtermedium 56, welches einen Innenumfang und einen Außenumfang 58, 60 aufweist, wobei Faltenkanten 62 auf dem Innen- und/oder Außenumfang 58, 60 des Filterkörpers 12 liegen und die Faltenkanten 62 mindestens bereichsweise eine Folge von Prägestellen 64 aufweisen, welche benachbarte Faltenkanten 62 gegeneinander fixieren.

Günstigerweise ist dabei das Filtermedium 56 aus Papier, aus Papier mit Kunststofffasern verstärkt und/oder aus kunststoffbeschichtetem Papier gebildet.

Figur 5 zeigt ebenfalls in rein schematischer Darstellung einen Filterkörper 12 mit den Stirnseiten 52, 54 nach einem Ausführungsbeispiel der Erfindung mit Prägestellen 64 auf dem Innen- und Außenumfang 58, 60 des Filterkörpers 12 sowie einem Fadenwickel 66 auf dem Außenumfang 60. Hier sind neben den ringförmig aufgebrachten Prägestellen 64 weitere ringförmige Fäden eines Fadenwickels 66 zu sehen, der zur Versteifung des gesamten Verbundes auf den Außenumfang 60 des Filterkörpers 12 aufgebracht wird. Der Innenumfang 58 zeigt weiterhin eine reine Verprägung mit Prägestellen 64 des Filterkörpers 12.

In der realen Ausführungsform der Erfindung ist an dem Filterkörper 12 zusätzlich zu den Prägestellen 64 ein Fadenwickel 66 aus mindestens einem umlaufenden Faden 68 am Außenumfang 60 des Filterkörpers 12 angebracht. Weiter kann der Fadenwickel 66 noch mindestens einen Faden 68 senkrecht zu den rundum laufenden Fäden in Richtung der Längsachse L am Außenumfang 60 des Filterkörpers 12 umfassen, um den Filterkörper 12 auf diese Weise zusätzlich zu versteifen. Der Fadenwickel 66 kann zweckmäßigerweise aus einem kunststoffgetränkten Faden bestehen, um so gegen Feuchtigkeitseinflüsse geschützt zu sein. Der Fadenwickel 66 kann weiter auf dem Filtermedium 56 über eine Schmelzklebeverbindung nach der Anbringung auf dem Außenumfang 60 des Filterkörpers 12 fixiert werden.

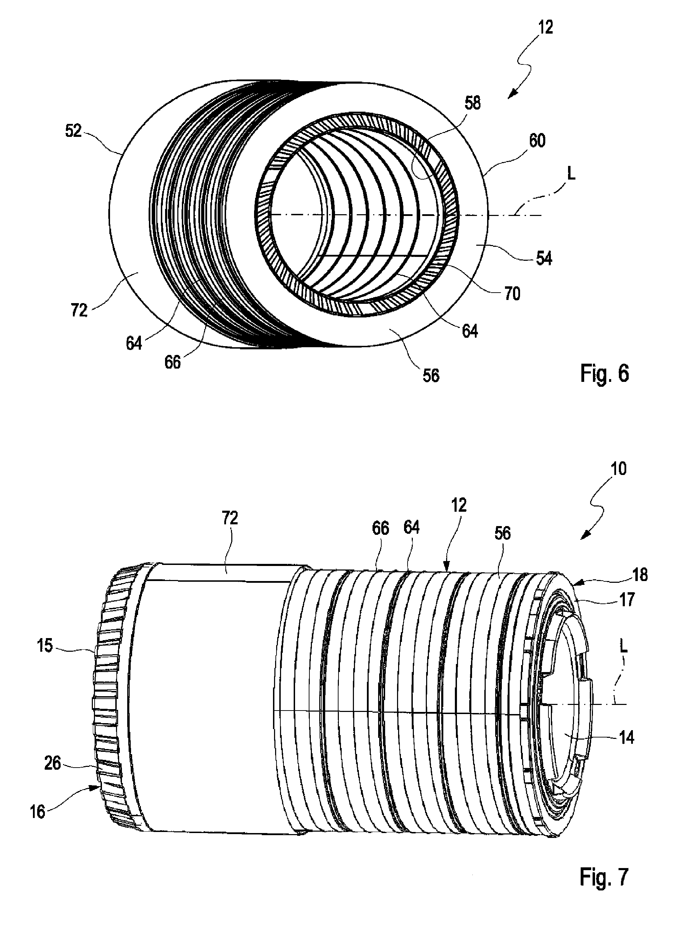

In Figur 6 ist ein Filterkörper 12 nach einem weiteren Ausführungsbeispiel der Erfindung mit Prägestellen 64 auf dem Innen- und Außenumfang 58, 60 des Filterkörpers 12, einem Fadenwickel 66 auf dem Außenumfang 60 sowie einem Versteifungsring 70 auf einer Stirnseite 54 rein schematisch dargestellt. In einem Bereich des Filterkörpers 12 ist ein Griffschutz 72 in Form beispielsweise einer Folie dargestellt, mit Hilfe derer der Filterkörper 12 als fertiges Filterelement von Hand in ein Gehäuse aus- und eingebaut werden kann.

Figur 7 zeigt ein Filterelement 10 aus einem Filterkörper 12 nach Figur 5. Der Filterkörper 12 ist hierbei mit einer ersten an einer Stirnseite 15 angeordneten offenen oder geschlossenen Endscheibe 16 und einer zweiten an der gegenüberliegenden Stirnseite 17 angeordneten Endscheibe 18 versehen, die eine zusätzliche Versteifung des Filterelements 10 bewirken und außerdem als elastische Elemente - sie bestehen üblicherweise aus Polyurethanschaum oder einem Elastomer - den Einbau und die Verspannung des Filterelements 10 in einem Gehäuse ermöglichen. Weiter weist es ein um die Längsachse L konzentrisch zwischen der ersten und der zweiten Endscheibe 16, 18 angeordnetes Stützrohr 14 auf. Die erste Endscheibe 16 weist eine radiale Dichtung 26 zur Abdichtung gegenüber einem Gehäuse auf.

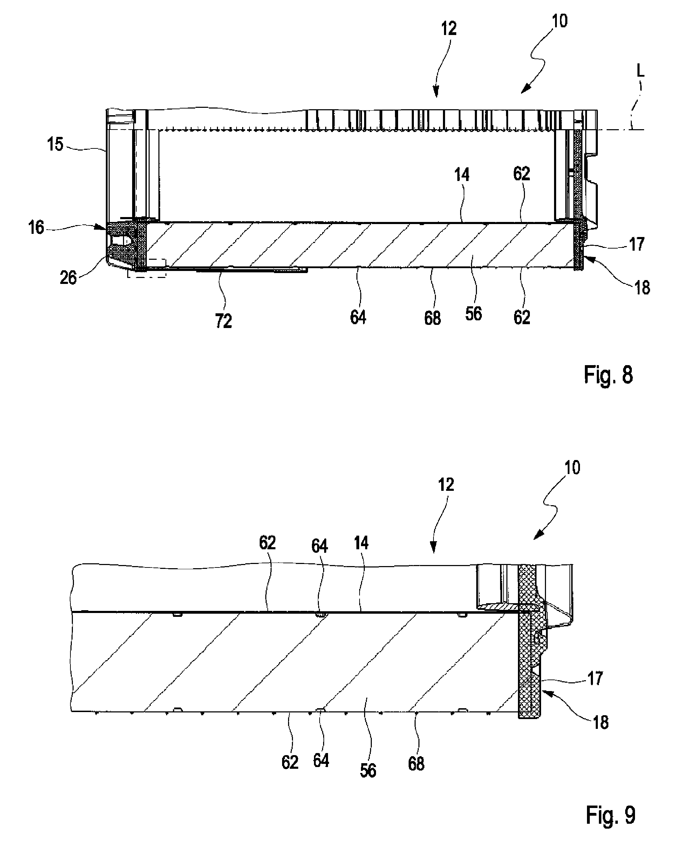

In Figur 8 ist ein Längsschnitt durch ein Filterelement 10 nach Figur 7 dargestellt. Der Schnitt durch den Filterkörper 12, der zwischen den beiden Endscheiben 16, 18, die beispielsweise aus angespritztem Polyurethan oder Elastomer bestehen können, liegt, zeigt in regelmäßigem Abstand angebrachte Prägestellen 64 als Vertiefungen im Filtermedium 56, sowie die auf das Filtermedium 56 aufgebrachte Fäden eines Fadenwickels 66. Dadurch ist eine signifikante Versteifung des Filterkörpers 12 auch bei Eintrag einer gewissen Luftfeuchtigkeit und bei großen Temperaturwechseln der gefilterten Luft gegeben.

Figur 9 zeigt eine vergrößerte Ansicht eines Teils des Längsschnitts durch ein Filterelement 10 nach Figur 7. In dieser Darstellung sind die Vertiefungen der Prägestellen 64 sowie die aufgebrachten Fäden des Fadenwickels 66 deutlicher zu erkennen.

## Patentansprüche

1. Filterkörper (12) mit einer Längsachse (L) und zwei Stirnseiten (52, 54), umfassend ein um die Längsachse (L) angeordnetes, zickzackförmig gefaltetes Filtermedium (56), welches einen Innenumfang und einen Außenumfang (58, 60) aufweist, wobei Faltenkanten (62) auf dem Innen- und/oder Außenumfang (58, 60) des Filterkörpers (12) liegen und die Faltenkanten (62) mindestens bereichsweise eine Folge von Prägestellen (64) aufweisen, welche benachbarte Faltenkanten (62) gegeneinander fixieren, und ein Fadenwickel (66) aus mindestens einem umlaufenden Faden (68) am Außenumfang (60) des Filterkörpers (12) angebracht ist.

2. Filterkörper nach Anspruch 1, wobei das Filtermedium (56) aus Papier, aus Papier mit Kunststofffasern verstärkt und/oder aus kunststoffbeschichtetem Papier gebildet ist.

3. Filterkörper nach Anspruch 1 oder 2, wobei der Fadenwickel (66) mindestens einen Faden (68) in Richtung der Längsachse (L) am Außenumfang (60) des Filterkörpers (12) umfasst.

4. Filterkörper nach einem der vorhergehenden Ansprüche, wobei der Fadenwickel (66) aus einem kunststoffgetränkten Faden besteht.

5. Filterkörper nach einem der vorhergehenden Ansprüche, wobei der Fadenwickel (66) mit dem Filtermedium (56) verklebt ist.

6. Filterkörper nach einem der vorhergehenden Ansprüche, wobei der Filterkörper (12) an mindestens einer Stirnseite (52, 54) einen Versteifungsring (70) aufweist.

7. Filterelement (10), umfassend einen Filterkörper (12) nach einem der vorhergehenden Ansprüche, eine erste an einer Stirnseite (15) angeordnete offene oder geschlossene Endscheibe (16) und eine zweite an der gegenüberliegenden Stirnseite (17) angeordnete Endscheibe (18), ein um die Längsachse (L) konzentrisch zwischen der ersten und der zweiten Endscheibe (16, 18) angeordnetes Stützrohr (14).

8. Filterelement nach Anspruch 7, wobei die zweite Endscheibe (18) aus einem Polyurethanschaum oder einem Elastomer besteht.

9. Filterelement nach Anspruch 7 oder 8, wobei die erste Endscheibe (16) eine radiale Dichtung (26) zur Abdichtung gegenüber einem Gehäuse (108) aufweist.

10. Verwendung eines Filterelements (10) nach einem der vorhergehenden Ansprüche, als Luftfilter, insbesondere als Luftfilter einer Brennkraftmaschine.

11. Verwendung eines Filterelements (10) nach einem der vorhergehenden Ansprüche, als Partikelfilter, insbesondere als Dieselpartikelfilter einer Brennkraftmaschine.

12. Filtersystem (100) mit einem Filterelement (10) nach einem der Ansprüche 7 bis 9, umfassend
- ein Gehäuse (108), welches im Wesentlichen konzentrisch um eine Längsachse (L) aufgebaut ist,
- einen das Gehäuse (108) verschließenden Deckel (110), der ebenfalls konzentrisch um die Längsachse (L) aufgebaut ist,
- einen am Gehäuse (108) und/oder Deckel (110) angeordneten Einlass (102) zum Zuführen des zu filternden Mediums, insbesondere Luft,
wobei am Gehäuse (108) konzentrisch zur Längsachse (L) ein Auslass (104) zur Ableitung des gefiltertem Mediums vorgesehen ist, wobei am Gehäuse (108) im Bereich des Auslasses (104) eine Dichtungskontur (116) vorgesehen ist, die mit der radialen Dichtung (26) der ersten Endscheibe (16) des Filterelements (10) korrespondiert, wobei das Filterelement (10) auswechselbar in dem Gehäuse (108) des Filtersystems (100) angeordnet ist.

13. Filtersystem (100) nach Anspruch 12, wobei im Bereich des Einlasses (102) ein Zyklonabscheider (36) vorgesehen ist und am Gehäuse (108) oder am Deckel (110) ein Schmutzauslass (106) vorgesehen ist.

14. Filtersystem (100) nach Anspruch 12 oder 13, wobei ein Sekundärelement (28) im Inneren (50) des Filterelements (10) angeordnet ist.

15. Filtersystem (100) nach Anspruch 14, wobei das Sekundärelement (28), mit dem Gehäuse (108) verbunden, beim Wechsel des Filterelements (10) im Gehäuse (108) verbleibt.
